(19) Europäisches Patentamt
European Patent Office
Office européen des brevets

(11) **EP 0 720 381 A1**

(12) **EUROPEAN PATENT APPLICATION**

(43) Date of publication:
03.07.1996 Bulletin 1996/27

(51) Int. Cl.⁶: **H04N 7/36**

(21) Application number: **94120945.4**

(22) Date of filing: **30.12.1994**

(84) Designated Contracting States:
**DE FR GB NL**

(71) Applicant: **DAEWOO ELECTRONICS CO., LTD**
**Jung-Gu, Seoul 100-095 (KR)**

(72) Inventor: **Jung, Hae-Mook**
**Mapo-ku, Seoul (KR)**

(74) Representative: **von Samson-Himmelstjerna,**
**Friedrich R., Dipl.-Phys. et al**
**SAMSON & PARTNER**
**Widenmayerstrasse 5**
**D-80538 München (DE)**

(54) **Method and apparatus for encoding a video signal using pixel-by-pixel motion prediction**

(57)     An apparatus, for use in a motion-compensated video signal encoder, for determining a predicted current frame based on a current frame and a previous frame of a digital video signal, comprising: a unit for selecting a number of pixels from the pixels contained in the previous frame; a unit for detecting a first set of motion vectors between the current and the previous frames, each of the first set of motion vectors representing a motion for each of the selected pixels; a unit for producing a second set of motion vectors for all of the pixels contained in the current frame by using said first set of motion vectors; and a unit for assigning the value of each of the pixels in the previous frame, which corresponds to one of the pixels in the current frame through one of the second set of motion vectors, as the value of said one of the pixels in the current frame.

FIG.2

**Description**

Field of the Invention

The present invention relates to a method and an apparatus for encoding a video signal; and, more particularly, to a method and an apparatus for encoding a video signal using a pixel-by-pixel motion prediction technique.

Description of the Prior Art

As is well known, transmission of digitized video signals can attain video images of a much higher quality than the transmission of analog signals. When an image signal comprising a sequence of image "frames" is expressed in a digital form, a substantial amount of data is generated for transmission, especially in the case of a high definition television system. Since, however, the available frequency bandwidth of a conventional transmission channel is limited, in order to transmit the substantial amounts of digital data therethrough, it is inevitable to compress or reduce the volume of the transmission data. Among various video compression techniques, the so-called hybrid coding technique, which combines temporal and spatial compression techniques together with a statistical coding technique, is known to be most effective.

Most hybrid coding techniques employ a motion compensated DPCM(differential pulse coded modulation), two-dimensional DCT(discrete cosine transform), quantization of DCT coefficients, and VLC(variable length coding). The motion compensated DPCM is a process of estimating the movement of an object between a current frame and its previous frame, and predicting the current frame according to the motion flow of the object to produce a differential signal representing the difference between the current frame and its prediction. This method is described, for example, in Staffan Ericsson, "Fixed and Adaptive Predictors for Hybrid Predictive/Transform Coding", IEEE Transactions on Communications, COM-33, No. 12(December 1985); and in Ninomiya and Ohtsuka, "A Motion-Compensated Interframe Coding Scheme for Television Pictures", IEEE Transactions on Communications, COM-30, No. 1 (January 1982).

The two-dimensional DCT, which reduces or makes use of spatial redundancies between image data, converts a block of digital image data, for example, a block of 8x8 pixels, into a set of transform coefficient data. This technique is described in Chen and Pratt, "Scene Adaptive Coder", IEEE Transactions on Communications, COM-32, No. 3(March 1984). By processing such transform coefficient data with a quantizer, zigzag scanning, and VLC, the amount of data to be transmitted can be effectively compressed.

Specifically, in the motion compensated DPCM, current frame data is predicted from the corresponding previous frame data based on an estimation of the motion between the current and the previous frames. Such estimated motion may be described in terms of two dimensional motion vectors representing the displacement of pixels between the previous and the current frames.

There have been two basic approaches to estimate the displacement of pixels of an object. Generally, they can be classified into two types: one is a block-by-block estimation and the other is a pixel-by-pixel approach.

In the block-by-block motion estimation, a block in a current frame is compared with blocks in its previous frame until a best match is determined. From this an interframe displacement vector (how much the block of pixels has moved between frames) for the whole block can be estimated for the current frame being transmitted. However, in the block-by-block motion estimation, blocking effect at the boundary of a block may occur in a motion compensation process; and poor estimates may result if all pixels in the block do not move in a same way, to thereby decrease the overall picture quality.

Using a pixel-by-pixel approach, on the other hand, a displacement is determined for each and every pixel. This technique allows a more exact estimation of the pixel value and has the ability to easily handle scale changes (e.g., zooming, movement perpendicular to the image plane). However, in the pixel-by-pixel approach, since a motion vector is determined at each and every pixel, it is virtually impossible to transmit all of the motion vectors to a receiver.

Summary of the Invention

It is, therefore, a primary object of the invention to provide an improved motion estimation and compensation technique on a pixel-by-pixel basis using feature points in accordance with the present invention.

In accordance with the invention, there is provided an apparatus, for use in a motion-compensated video signal encoder, for determining a predicted current frame based on a current frame and a previous frame of a digital video signal, comprising: means for selecting a number of pixels from the pixels contained in the previous frame; means for detecting a first set of motion vectors between the current and the previous frames, each of the first set of motion vectors representing a motion for each of the selected pixels; means for producing a second set of motion vectors for all of the pixels contained in the current frame by using said first set of motion vectors; and means for assigning the value of each of the pixels in the previous frame, which corresponds to one of the pixels in the current frame through one of the second set of motion vectors, as the value of said one of the pixels in the current frame, to thereby determine the predicted current frame.

The above and other objects and features of the present invention will become apparent from the following description of preferred embodiments given in conjunction with the accompanying drawings, in which:

FIG. 1 is an image signal encoding apparatus having a current frame prediction block in accordance with the present invention;

Fig. 2 shows a detailed block diagram of the current frame prediction block of Fig. 1;

Fig. 3 describes an exemplary frame to define feature points;

Figs. 4A and 4B illustrate two types of grids to select feature points;

Figs. 5A and 5B represent a technique to select feature points through the use of grids and edges; and

Fig. 6 depicts a method of detecting a motion vector for a non-quasi-feature point.

Detailed Description of the Preferred Embodiments

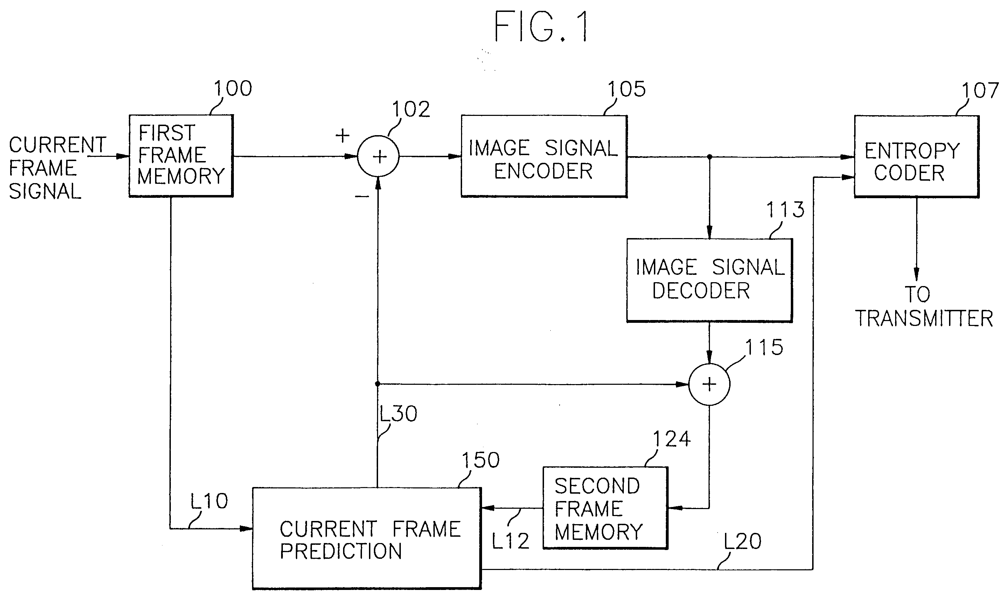

Fig. 1 describes a preferred embodiment of an image signal encoding apparatus having a current frame prediction block of the present invention. As shown in Fig. 1, a current frame signal is stored in a first frame memory 100 which is connected to a subtractor 102 through a line L11 and to a current frame prediction block 150 through a line L10.

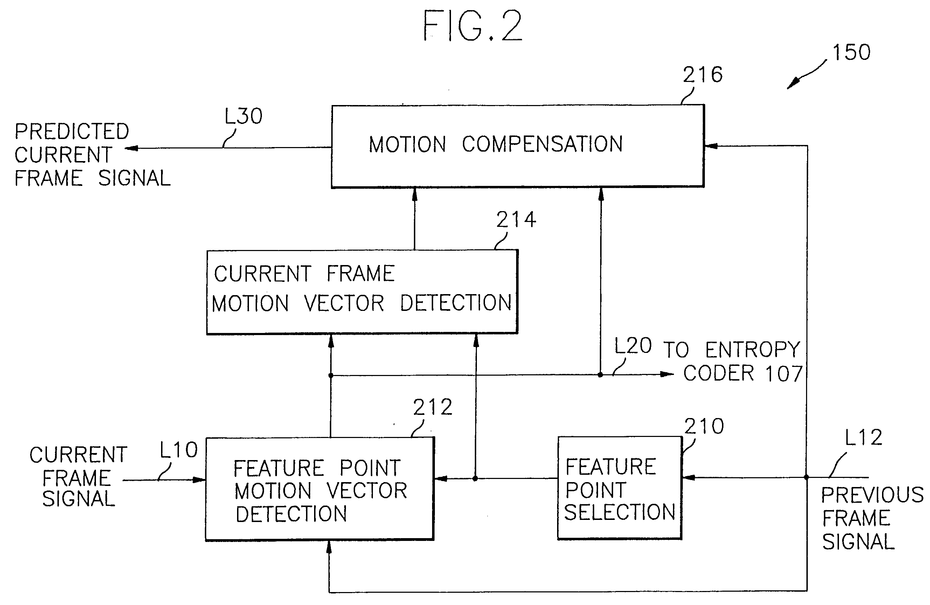

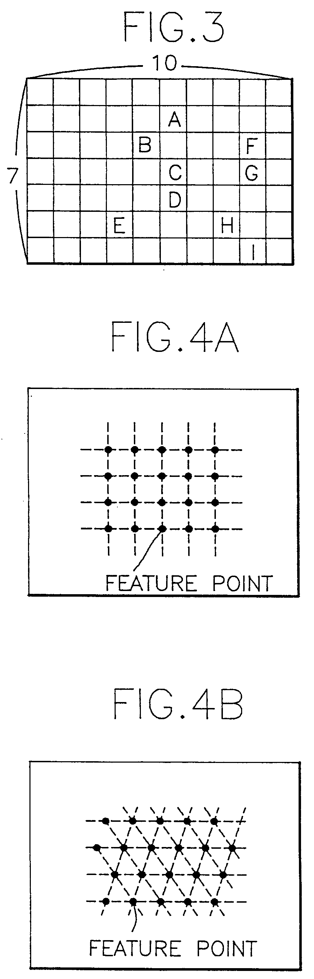

In the current frame prediction block 150, a current frame signal on a line L10 retrieved from the first frame memory 100 and a reconstructed previous frame signal on a line L12 from a second frame memory 124 are processed to predict the current frame on a pixel-by-pixel basis to generate a predicted current frame signal onto a line L30 and a set of motion vectors for feature points onto a line L20. Details of the current frame prediction block 150 will be described with reference to Figs. 2 and 3.

The predicted current frame signal on the line L30 is subtracted from a current frame signal on the line L11 at the subtractor 102, and the resultant data, i.e., an error signal denoting a differential pixel value, is dispatched to an image signal encoder 105, wherein the error signal is encoded into a set of quantized transform coefficients, e.g., by using a DCT and any of the known quantization methods. Thereafter, the quantized transform coefficients are transmitted to an entropy coder 107 and an image signal decoder 113. At the entropy coder 107, the quantized transform coefficients from the image signal encoder 105 and the motion vectors transmitted through the line L20 from the current frame prediction block 150 are coded together by using, e.g., a variable length coding technique; and transmitted to a transmitter(not shown) for the transmission thereof. In the meantime, the image signal decoder 113 converts the quantized transform coefficients from the image signal decoder 105 back into a reconstructed error signal by employing an inverse quantization and an inverse discrete cosine transform.

The reconstructed error signal from the image signal decoder 113 and the predicted current frame signal on the line L30 from the current frame prediction block 150 are combined at an adder 115 to thereby provide a reconstructed current frame signal to be stored as a previous frame in the second frame memory 124.

Referring to Fig. 2, there are illustrated details of the current frame prediction block 150 shown in Fig. 1. As shown in Fig. 2, a previous frame signal on the line L12 from the second frame memory 124 is inputted to a feature point selection block 210, a feature point motion vector detection block 212 and a motion compensation block 216.

At the feature point selection block 210, a number of feature points are selected among the pixels contained in the previous frame. Each of the feature points is defined as a position of a pixel which is capable of representing the motion of an object in the frame. Referring to Fig. 3, there is shown an exemplary frame of 10x7 pixels. If an moving object exists around the center of the frame and the motion of the moving object is successfully represented by a set of pixels "A" to "I", these pixels are selected as the feature points of the frame.

In a preferred embodiment of the present invention, the feature points are determined by a grid technique employing various types of grid, e.g., a rectangular grid or a hexagonal grid shown in Figs. 4A and 4B, respectively. As shown in Figs. 4A and 4B, the feature points are located at the nodes of the grids.

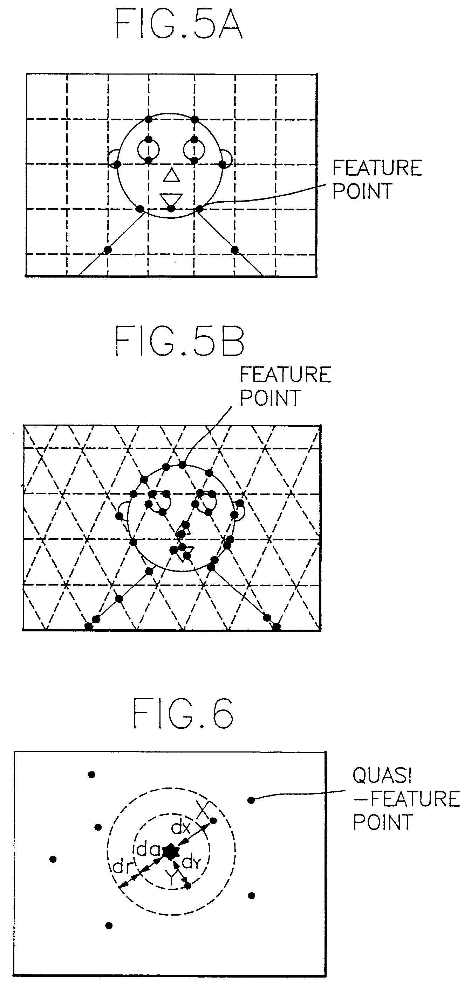

In another preferred embodiment of the invention, an edge detection technique is employed together with the above described grid technique as shown in Figs. 5A and 5B. In this technique, intersection points of the grid and the edge of the moving object are selected as feature points.

Referring back to Fig. 2, the selected feature points from the feature point selection block 210 are inputted to a feature point motion vector detection block 212 and a current frame motion vector detection block 214. And the current frame signal on the line L10 is provided to the feature point motion vector detection block 212.

At the feature point motion vector detection block 212, a first set of motion vectors for each of the selected feature points is detected. Each of the motion vectors of the first set is a spatial displacement between a feature point in the previous frame and a most similar pixel thereto in the current frame.

There are many processing algorithms to detect the motion vectors on a pixel-by-pixel basis. In the preferred embodiments of the invention, there is used a block matching algorithm: when a feature point is received from the feature point selection block 210, a feature point block having the feature point at the center thereof, e.g., 5x5 pixels of the previous frame, is retrieved via the line L12 from the second frame memory 124(shown in Fig. 1). Thereafter, a feature point motion vector for the feature point block is determined after a similarity calculation between the feature point block and each of a plurality of equal-sized candidate blocks included in a generally larger search region, e.g., 10x10 pixels of current frame retrieved from the first frame memory 100(shown in Fig. 1).

After detecting the motion vectors for all of the feature points, the first set of motion vectors is provided to a current frame motion vector detection block 214 and the entropy coder 107(shown in Fig. 1) via the line L20. In the current frame motion vector detection block 214, a second set of motion vectors for all of the pixels contained in the current frame is determined through the use of the first set of motion vectors and the feature point information from the feature point selection block 210. In order to determine the second set of motion vectors, first, a set of vectors for "quasi-feature points", which represent pixel points of the current frame shifted from the feature points of the previous frame by the first set of motion vectors, are determined. The magnitude of a motion vector for a quasi-feature point is identical to the motion vector for its corresponding feature point but the direction of the two motion vectors is opposite. After determining the motion vectors for all of the quasi-feature points, motion vectors for non-quasi-feature points, which are the remaining pixel points in the current frame, are determined as follows.

As shown in Fig. 6, a number of quasi-feature points are irregularly distributed in the entire current frame. A motion vector for a star marked non-quasi-feature point is determined by averaging the quasi-feature points which are placed within a circle boundary having a radius of "dr+da", wherein "da" is the distance to the nearest quasi-feature point from the star marked pixel position, and "dr" is a predetermined expanded radius for including other feature points to be used in the motion vector calculation. For example, if the nearest feature point is "Y", and the feature point "X" is located within the boundary of "da+dr", the motion vector ($MV_x/MV_y$) for the star marked pixel is calculated as:

$$(MV_x, MV_y) = \frac{\frac{1}{d_X}(MV_x, MV_y)_X + \frac{1}{d_Y}(MV_x, MV_y)_Y}{\frac{1}{d_X} + \frac{1}{d_Y}}$$

wherein $d_X$ and $d_Y$ are the distances of quasi-feature points X and Y from the star marked pixel position, respectively. And, $(MV_x, MV_y)_X$ and $(MV_x, MV_y)_Y$ are the respective motion vectors for the quasi-feature points.

Referring back to Fig. 2, the second set of motion vectors for quasi-feature points and non-quasi feature points are provided to the motion compensation block 216. In the motion compensation block, each value of the pixels to be contained in a predicted current frame is retrieved from the second frame memory 124(shown in Fig. 1) by using each of the motion vectors contained in the second set.

In a decoder corresponding to the encoder of the present invention, the motion prediction block is of a similar structure to that of Fig. 2 except that there is no motion estimator such as the feature point motion vector detection block 212 as shown in Fig. 2, because the feature point motion vectors transmitted from the encoder are provided thereto. The prediction block includes a feature point selection block, a current frame motion vector detection block and a motion compensation block whose functions are the same as those explained with respect to the encoder above.

Further, a previous frame signal from a frame memory of the decoder is inputted to the feature point selection block to select a number of feature points. The current frame motion vector detection block determines motion vectors for all of the pixels to be contained in the predicted current frame in response to the selected feature points and motion vectors transmitted from the encoder explained with reference to Fig. 2. The motion compensation block provides the predicted current frame which is the same as that of the encoder. The predicted current frame is further processed at the decoder to recover the current frame which is substantially identical to the original video signal.

While the present invention has been shown and described with reference to the particular embodiments, it will be apparent to those skilled in the art that many changes and modifications may be made without departing from the spirit and scope of the invention as defined in the appended claims.

## Claims

1. An apparatus, for use in a motion-compensated video signal encoder, for determining a predicted current frame based on a current frame and a previous frame of a digital video signal, comprising:

   means for selecting a number of pixels from the pixels contained in the previous frame;

   means for detecting a first set of motion vectors between the current and the previous frames, each of the first set of motion vectors representing a motion for each of the selected pixels;

   means for producing a second set of motion vectors for all of the pixels contained in the current frame by using said first set of motion vectors; and

   means for assigning the value of each of the pixels in the previous frame, which corresponds to one of the pixels in the current frame through one of the second set of motion vectors, as the value of said one of the pixels in the current frame, to thereby determine the predicted current frame.

2. The apparatus in accordance with claim 1, wherein said producing means includes means for assigning the first set of motion vectors as one part of the second set of motion vectors for the pixels in the current frame corresponding to the selected pixels of the previous frame; and for averaging at least one motion vector contained in said one part of the second set of motion vectors to thereby determine remaining part of the second set of motion vectors.

3. A method, for use in a motion-compensated video signal encoder, for determining a predicted current frame based on a current frame and a previous frame of a digital video signal, comprising the steps of:

   (a) selecting a number of pixels from the pixels contained in the previous frame;
   (b) detecting a first set of motion vectors between the current and the previous frames, each of the first set of motion vectors representing a motion of each of the selected pixels;
   (c) producing a second set of motion vectors for all of the pixels contained in the current frame by using said first set of motion vectors; and
   (d) assigning the value of each of the pixels in the previous frame, which corresponds to one of the pixels in the current frame through one of the second set of motion vectors, as the value of said each of the pixels in the current frame, to thereby determine the predicted current frame.

4. The method in accordance with claim 3, wherein said step(c) includes the steps of:

   (c1) assigning the first set of motion vectors as one part of the second set of motion vectors for the pixels in the current frame corresponding to the selected pixels of the previous frame; and
   (c2) averaging at least one motion vector contained in said one part of the second set of motion vectors to thereby determine the remaining part of the second set of motion vectors.

5. An apparatus, for use in a motion-compensated video signal decoder, for determining a predicted current frame based on a previous frame of a digital video signal and a first set of motion vectors transmitted from an encoder, wherein the encoder includes means for selecting a number of pixels from the pixels contained in the previous frame and means for detecting said first set of motion vectors between the current and the previous frames, each of the first set of motion vectors representing a motion of each of the selected pixels between the current and the previous frames, comprising:

   means for selecting a number of pixels from the pixels contained in the previous frame;
   means for producing a second set of motion vectors for all of the pixels contained in the current frame by using said first set of motion vectors; and
   means for assigning the value of each of the pixels in the previous frame, which corresponds to one of the pixels in the current frame through one of the second set of motion vectors, as the value of said one of the pixels in the current frame, to thereby determine the predicted current frame.

6. The apparatus in accordance with claim 5, wherein said producing means includes means for assigning the first set of motion vectors as one part of the second set of motion vectors for the pixels in the current frame corresponding to the selected pixels of the previous frame; and for averaging at least one motion vector contained in said one part of the second set of motion vectors to thereby determine the remaining part of the second set of motion vectors.

7. A method, for use in a motion-compensated video signal decoder, for determining a predicted current frame based on a previous frame of a digital video signal and a first set of motion vectors transmitted from an encoder, wherein the encoder includes means for selecting a number of pixels from the pixels contained in the previous frame and means for detecting said first set of motion vectors between the current and the previous frames, each of the first set of motion vectors representing a motion of each of the selected pixels between the current and the previous frames, said method comprises the steps of:

   selecting a number of pixels from the pixels contained in the previous frame;
   producing a second set of motion vectors for all of the pixels contained in the current frame by using said first set of motion vectors; and
   assigning the value of each of the pixels in the previous frame, which corresponds to one of the pixels in the current frame through one of the second set of motion vectors, as the value of said one of the pixels in the current frame, to thereby determine the predicted current frame.

8. The method in accordance with claim 7, wherein said producing steps includes the steps of assigning the first set of motion vectors as one part of the second set of motion vectors for the pixels in the current frame corresponding to the selected pixels of the previous frame; and averaging at least one motion vector contained in said one part of the second set of motion vectors to thereby determine the remaining part of the second set of motion vectors.

FIG.1

CURRENT FRAME SIGNAL

100 FIRST FRAME MEMORY

102

105 IMAGE SIGNAL ENCODER

107 ENTROPY CODER

TO TRANSMITTER

113 IMAGE SIGNAL DECODER

115

124 SECOND FRAME MEMORY

150 CURRENT FRAME PREDICTION

L10

L12

L20

L30

7

# FIG.2

PREDICTED CURRENT FRAME SIGNAL ← L30 — MOTION COMPENSATION [216]

CURRENT FRAME MOTION VECTOR DETECTION [214]

L20 TO ENTROPY CODER 107

CURRENT FRAME SIGNAL → L10 → FEATURE POINT MOTION VECTOR DETECTION [212]

FEATURE POINT SELECTION [210]

L12 PREVIOUS FRAME SIGNAL

150

EP 0 720 381 A1

# FIG.3

# FIG.4A

FEATURE POINT

# FIG.4B

FEATURE POINT

# FIG.5A

FEATURE
POINT

# FIG.5B

FEATURE
POINT

# FIG.6

QUASI
−FEATURE
POINT

European Patent
Office

**EUROPEAN SEARCH REPORT**

Application Number

EP 94 12 0945

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | ICASSP'91 - INTERNATIONAL CONFERENCE ON ACOUSTICS, SPEECH AND SIGNAL PROCESSING, TORONTO, ONTARIO, CANADA, vol. 4, 14 April 1991 - 17 April 1991 pages 2713-2716, SULLIVAN G.J. ET AL. 'Motion compensation for video compression using control grid interpolation' * the whole document * | 1-8 | H04N7/36 |
| A | WO-A-92 03799 (TELEVERKET) * the whole document * | 1-8 | |
| E | EP-A-0 632 657 (OY NOKIA AB) 4 January 1995 * the whole document * | 1-8 | |
| A | & FI-A-932 520 (OY NOKIA AB) 3 December 1994 | | |
| A | IEEE TRANSACTIONS ON CONSUMER ELECTRONICS, IEEE, NEW YORK, US, vol. 39, no. 3, August 1993 pages 141-150, NIEWEGLOWSKI J. ET AL. 'A novel video coding scheme based on temporal prediction using digital image warping' * the whole document * | 1-8 | TECHNICAL FIELDS SEARCHED (Int.Cl.6) H04N |
| A | VISUAL COMMUNICATION AND IMAGE PROCESSING '91 - PROCEEDINGS OF THE SPIE, 1991, US, vol. 1605, no. 2, pages 546-557, NAKAYA ET AL. 'An iterative motion estimation method using triangular patches for motion compensation' * the whole document * | 1-8 | |

-/--

The present search report has been drawn up for all claims

| Place of search | Date of completion of the search | Examiner |
|---|---|---|
| THE HAGUE | 7 June 1995 | Giannotti, P |

EPO FORM 1503 03.82 (P04C01)

**European Patent Office**

# EUROPEAN SEARCH REPORT

Application Number

EP 94 12 0945

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | IEEE TRANSACTIONS ON CIRCUITS AND SYSTEMS FOR VIDEO TECHNOLOGY, vol. 4, no. 1, February 1994 NEW YORK US, pages 42-51, C.H.HUANG ET AL. 'A new motion compensation method for image sequence coding using hierachical grid interpolation' * abstract * | 1-8 | |
| | ----- | | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 7 June 1995 | Giannotti, P |

EPO FORM 1503 03.82 (P04C01)